Europäisches Patentamt

European Patent Office

Office européen des brevets

(11) Publication number: **0 121 834**
A2

## EUROPEAN PATENT APPLICATION

(21) Application number: 84103092.7

(22) Date of filing: 21.03.84

(51) Int. Cl.³: **F 16 F 3/10**, B 60 K 5/12, F 16 F 7/00

(30) Priority: 08.04.83 IT 2050383

(71) Applicant: **INDUSTRIE PIRELLI S.p.A.**, Piazzale Cadorna 5, I-20123 Milan (IT)

(43) Date of publication of application: 17.10.84 Bulletin 84/42

(72) Inventor: **Tangorra, Giorgio, Via Ramazzotti, 12, Monza (Milan) (IT)**
Inventor: **Robecchi, Edoardo, Via Chiesa, 56, Sesto S. Giovanni (Milan) (IT)**

(74) Representative: **Mariani, Giorgio, Dr. et al, INDUSTRIE PIRELLI S.p.A. Direzione Brevetti Piazzale Cadorna, 5, I-20123 Milano (IT)**

(84) Designated Contracting States: **DE FR GB**

(54) Antivibration device, particularly apt for an automotive engine support.

(57)    The invention refers to antivibration device, particularly suited for mounting motorcar engines, comprising a shaft (2) fixed to a base and supporting above it a metallic plate (3), fixing one extremity of a metallic container cylinder (4) inside which there is axially positioned a shaft (5) bearing the static work preload, through the means of a spacer spring (7) interposed between the plate (3) and a plate (6) held at one extremity of the same shaft (5) rigid revolving elements (9) being foreseen, disposed inbetween a viscoelastic material rolling race (10), preferably, sheathing the shaft (5), and a metallic sliding race (8) consisting of a groove made in the inner wall of the container cylinder (4) in which the said revolving elements are housed.

ANTIVIBRATION DEVICE, PARTICULARLY APT FOR AN AUTOMOTIVE ENGINE SUPPORT

Specification

The present invention has as its object an antivibration device, particularly for mounting motorcar engines, that is capable of providing a different braking action as a function of the amplitude of the vibrations.

One aim of the invention is to foresee an antivibration device capable of furnishing a diverse damping action as a function of the amplitude of the vibrations, around the preloaded static state.

Another aim of the invention is to realize an antivibration device that does not require cooling oils, in such a way as to simplify the planning and the construction of the device itself.

For achieving these aims, the antivibration device particularly for supporting motorcar engines, that forms the object of the present invention, is characterized by the fact of foreseeing a plurality of rigid revolving elements, interposed between a viscoelastic material rolling race and a metallic material sliding race, constituted by a circular groove made, for preference, in the internal part of a metallic container cylinder and in which said revolving elements are confined, maintaining their own centers of symmetry always on a same circumference in any whatsoever preloaded state.

The viscoelastic rolling race is disposed around a bearing shaft, entering axially into said metallic container cylinder and resting upon a spring, calibrated in such a way as to maintain said shaft balanced under the preloaded static state.

In a particular form of realization of the device according to the invention, the said viscoelastic race has a right-angled cylindrical profile and presents a circular periferic groove, that is disposed in front of the revolving elements. under a preloaded static state, in such a way that for small vibrations around such a condition, the revolving elements remain in said groove, exercising a null (or almost) braking action, whilst for vibrations of a greater amplitude said groove shifts from it balanced position, allowing the revolving elements to exercise a constant braking action, rolling in the viscoelastic material.

According to the variations of realization of the antivibration device, forming the object of the present invention, the viscoelastic revolving race is devoid of said peripherical groove, and it presents, in section, parabolic profiles or conical kinds, such as to give however for small vibrations around the preloaded static state, a null (or almost) braking action and to provide, instead, for greater vibrations, a variable braking action as a function of the amplitude and in the sense of the vibration itself.

These and other characteristics of the antivibration device, forming the object of the present invention, will result clearer from the detailed description that follows. referred to same exemplified and hence non-limiting forms of realization of the device itself, illustrated in the attached drawing whereby:

- FIGURE 1 is a partially in axial section view of the antivibration device according to the present invention.

- FIGURE 2 shows the diagram of a typical curve of the damping force as a function of the shiftings, in accordance with the realization illustrated in FIG. 1.

- FIGURE 3 illustrates an alternative realization of the antivibration device, according to the invention.

- FIGURE 4 is a diagram of a typical curve of the damping force as a function of the shiftings, in accordance of the realization of the device according to the invention, shown in FIG. 3.

- FIGURE 5 is a further alternative realization of the antivibration device according to the present invention.

- FIGURE 6 shows a diagram of a typical curve of the damping force as a function of the shiftings, obtainable with the device of the invention, according to the realization of FIG. 5.

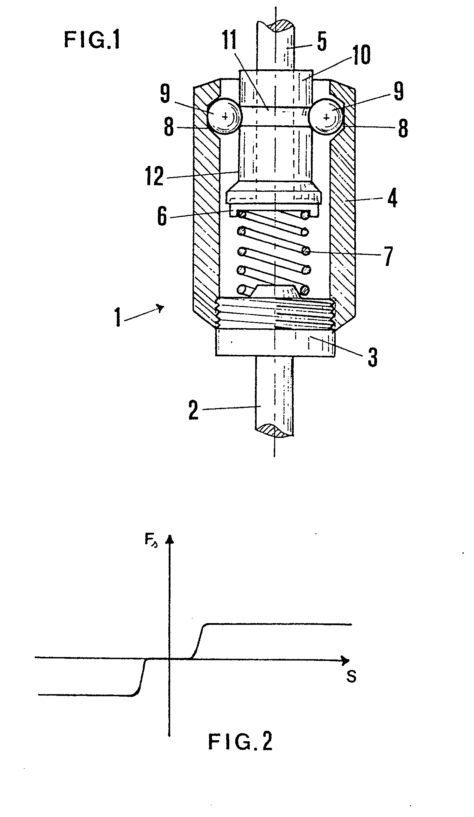

With reference to the said FIGURES, and for the moment particularly with reference to FIG. 1, with the numeral 1 is indicated in its whole, the antivibration device forming the object of the present invention to stated previously, said device finds convenient application in motorcar engine supports, but it is evident that it can also be applied in any whatsoever field that requires the typical effect it

4

produces, that will be illustrated further on.

Keeping to the field of engine supports, in FIG. 1, with the numeral 2 there is indicated an element, in this instance a cylindrical shaft fixed below to a base (not shown in the FIGURE), and bearing above a circular plate 3 that is screwed to the lower extremity of a metallic container cylinder 4.

Inside the cylinder 4, there is positioned the shaft 5, apt for supporting at least a part of the engines weight, and terminating below with a plate 6 preferably circular of a layer diameter. Between the plates 3 and 6, there is interposed of a pressure spring 7, or suchlike means, tared in such a way as to maintain the shaft 5 in the position indicated in FIG. 1, under a preloaded static state i.e. in the absence of vibrations.

Inside the cylinder 4, there is made a circular continuous groove 8, in which the rigid revolving elements 9 are lodged, which in the example shown in FIG. 1, and successively, are spheres, the profile of the groove 8 being such that the spheres 9 can freely rotate in it, without undergoing any appreciable shiftings in the vertical sense.

The shaft 5 presents, for a part of its length, a cladding 10 in viscoelastic material, with a groove 11, disposed in front of the spheres 9, when the device is in a preloaded static state.

In this way, the rigid revolving elements 9, are found interposed between a viscoelastic rolling race 10 and a metallic sliding race, constituted by the groove 8. in which said elements are lodged.

For small vibrations of the shaft 5 or of the metallic container cylinder (4), around the preloaded static state, illustrated in FIG. 1, the device of the invention exercises an almost null braking action, seeing that the spheres 9 remain in the groove 11, made in the viscoelastic material race 10. When the amplitude of the vibrations, in one or other direction, exceeds a certain value, the device 1 exercises a constant braking action, due to the sinking and rolling of the spheres 9 in the flat part 12 of the viscoelastic material race 10.

The diagram of FIG. 2 gives the typical curve of the damping force as a function of the shiftings form the preloaded static state, that are obtainable with the device illustrated in FIG. 1.

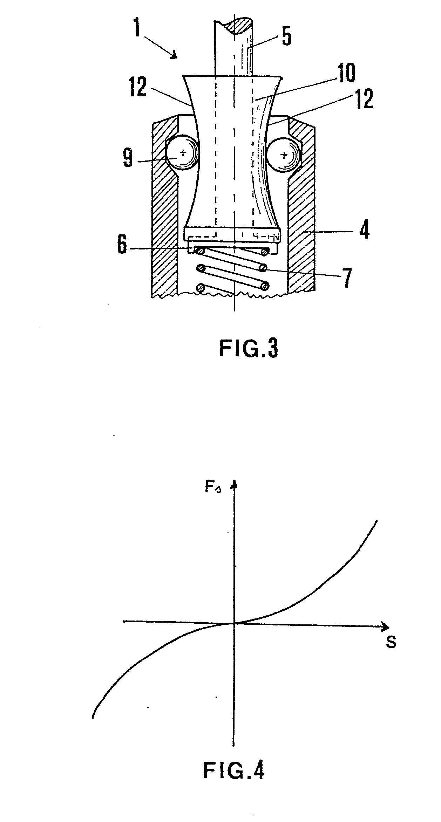

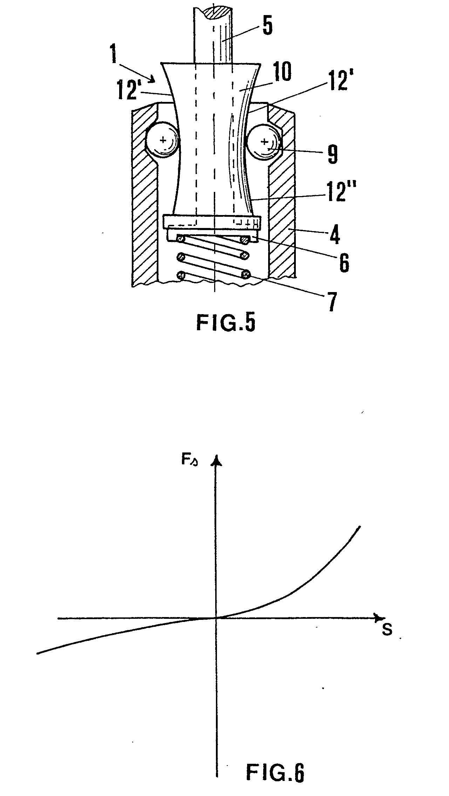

There shall now be illustrated, with reference to FIGS. 3 and 5, other two forms of realization of the antivibration device, according to the invention, utilizing the same numerical references adopted for FIG. 1, for contradistinguishing parts that are substantially similar.

In the realization of FIG. 3, there is eliminated the peripherical groove 11, foreseen in the viscoelastic material race 10, and the profile 12 of the same is modified causing it to assume a symmemtrical curved development, as shown in the FIGURE. Under preloaded static conditions, the revolving elements that are once more spherical, are disposed in the most hollowed out part of the symmetrical profile 12, and for small vibrations around about this condition, the braking force exercised from them is null or almost so. When the amplitude of the vibrations increases, the braking force also increases progressively, seeing that the spheres 5 get even further embedded into the viscoelastic material tract 10.

FIG. 4, is a diagram showing the development of the damping forces, as a function of the shiftings, from the preloaded static condition, that are obtainable with the device that is realized in FIG. 3. The symmetry of the curve shown, demonstrates how the damping effect is the same, at a parity of the amplitude of the vibrations, in both the sliding senses.

In the realization of FIG. 5, the profile of the viscoelastic tract 10, is rendered non-symmetrical, so as to present a tract 12' having a greater slope with respect to the contiguous tract 12".

In this instance, although the braking action is maintained very low for small vibrations of the shaft 5, around this preloaded static condition, instead, the braking action for greater amplitudes of the vibrations, is differentiated in the two senses of the sliding of the shaft 5 with respect to the container cylinder 4.

One possible development of the damping force as a function of the shiftings from the preloaded static condition, as optainable with the realization of FIG. 5, is given in the graph of FIG. 6.

In all the realizations given of the antivibration device according to the invention, the presence is unnecessary of a cooling oil. As a matter of fact the power lost due to the effect of hysteresis, in the viscoelastic material of the rolling race 10, as proportionate to the sum total of the

partial products of the braking torques of the rollers 5 multiplied by the number of their rotations in the time unit, transformed into heat, becomes dispersed into the surrounding ambient, through the metallic container cylinder 4. For having a good working of the antivibration device according to the invention, the only thing that is advisable is a greasing of the groove 8 in which the spheres 9 are lodged.

Although the revolving elements 9, in the attached FIGURES, have been taken to be spheres, with suitable adaptions, these can be rollers, pins and suchlike just as even the shafts and the metallic container cylinder 4 can have a diverse cross-section to the circular are shown. For example, the body 5 could have a very thin and flexible section, and with this solution, in place of the spheres, rollers may be used.

In another alternative variation, there can be foreseen in place of the steel spring, an elastomeric material body, in particular according to some uses with elastic non-linear characteristics.

In a further solution, the device could have a spring 7 that works by traction instead of compression the concept of the damping part still being valid here.

According to a preferred realization, the device could comprise several rows of spheres or rollers, in such a way as to carry-out useful guide functions.

What also is included in this invention is the solution wherein the viscoelastic material rolling race covers, at least partically, the inner wall of the metallic container cylinder, and that the metallic sliding race is made in the

8

shaft.

Of course, to the antivibration device, forming the object of the present invention, as previously described and illustrated with reference to the purely explified forms of realization, there can be carried out numerous modifications which are available to the technician of the field, that might be considered necessary in order to achieve some practical actuation without this exiting from the ambit of the invention itself.

1

WHAT WE CLAIM IS:

1. Antivibration device, particularly apt for mounting motorcar engines, comprising a shaft (2) fixed below to a base, and supporting above a plate (3) that is screwed to a lower extremity of a metallic container cylinder (4), in which a shaft (5) is axially positioned, bearing the preloaded work static, and maintained in a balanced position by a tared spring (7) interposed between said plate (3) and a plate (6) borne below by the same shaft (5), characterized by the fact that it foresees a plurality of rigid revolving elements (9) interposed at least between a viscoelastic material rolling race (10) and at least a metallic material sliding race (8) constituted by a circular groove, inside which the said revolving elements (9) are lodged, with maintaining their own symmmetrical centers always on a same circumference, in any whatsoever loaded condition.

2. Antivibration device, according to CLAIM 1, characterized by the fact that the said viscoelastic covering has a constant thickness and presents a peripherical groove (11), disposed in front of the revolving elements (9) in a preloaded static state, in such a way that for small vibrations around the preloaded static state, the said revolving elements (9) stay inside the groove (11) exercising a null (or almost) braking action, whilst for the amplitude of the vibrations around the preloaded static state, exceeding a certain threshold, a constant braking action is had, owing to the sinking of the revolving elements (9) in the flat part of the viscoelastic race (10).

3. Antivibration device as in CLAIM 1, whereby the said viscoelastic covering (10) presents a symmetrically variable thickness with respect to the central zone of a lesser thickness, that is disposed in front of the revolving elements (9) in a preloaded static state, in this way to have for amplitudes of the increasing vibrations, progressively and equally increasing braking forces in the two sliding directions of the shaft (5).

4. Antivibration device, as in CLAIM 1, characterized by the fact that the said viscoelastic covering (10) presents a minimum thickness in the mid-zone, that is disposed in front of the revolving elements (9), in a preloaded static state, and a gradually increasing thickness with a diverse slopings towards the two opposite ends, in such a way that for the amplitudes of the increasing vibrations, there are damping forces, also progressively increasing, but differentiated in the two sliding directions of the shaft (5) in the container cylinder (4).

5. Antivibration device, according to the previous CLAIMS, wherein the said revolving elements (9) are spheres.

6. Antivibration device as in CLAIM 1 and one or more of the previous CLAIMS, characterized by the fact that the viscoelastic material rolling race (10) covers, at least partially, the shaft (5) and the metallic material sliding race (8) is made in the internal wall of the metallic container cylinder (4).

7. Antivibration device according to CLAIM 1, characterized by the fact that the viscoelastic material rolling race covers, at least partially, the inner (10) wall of the metallic container cylinder (4) and the metallic material sliding race is made on the shaft (5).

8.    Antivibration device, according to CLAIM 1, wherein the shaft (5) has a rectangular, flattened, flexible section.

9.    Antivibration device, as in CLAIM 1, in which the said spring (7), interposed between the strip (3) and the strip (6) as borne by the shaft (5) functions as a compression spring.

10.    Antivibration device, as in the previous CLAIMS, wherein the spring (7) is substituted by a rubber element, for the purpose of having a non-linear response of the system.

FIG.1

11  5  10
9   9
8   8
12
6
4
1
7
3

2

$F_{\supset}$

S

FIG.2

FIG.3

FIG.4

FIG.5

FIG.6